# EUROPEAN PATENT APPLICATION

(11) **EP 4 512 250 A1**
(43) Date of publication of application: **26.02.2025**
(21) Application number: 23192856.5
(22) Date of filing: 23.08.2023
(51) Int. Cl.: A23J 1/00, A23J 1/16, A23J 3/14

(54) **A METHOD FOR MANUFACTURING A PROTEIN POWDER AND A PROTEIN POWDER**

(71) Applicant: Finnamyl Oy, 32800 Kokemäki (FI)
(72) Inventor: KOIVU, Kimmo, 00790 Helsinki (FI); LINDHOLM, Maria, 32800 Kokemäki (FI); NURKKALA, Heli, 32800 Kokemäki (FI)
(74) Representative: Espatent Oy

(57) **Abstract**

Herein is disclosed a method for producing food grade tuber protein powder comprising adding to an aqueous tuber protein slurry at least one sugar additive followed by drying. Also disclosed is a food grade protein powder obtained by the method, food products comprising the food-grade tuber protein powder, and an additive or a processing aid comprising the present food-grade tuber protein powder.

## Description

### TECHNICAL FIELD

The present disclosure generally relates to a method for producing a food-grade tuber protein powder, to a food-grade tuber protein powder, and to a food product comprising the food-grade tuber protein powder.

### BACKGROUND

This section illustrates useful background information without admission of any technique described herein being representative of the state of the art.

Presently there is a growing need for vegetable protein sources for human use. Previously some attempts have been made to manufacture protein products from plant sources. Tuber protein products have been difficult to manufacture for human use because of their high glycoalkaloid content, moderate organoleptic properties, and the tendency of the tuber protein to irreversibly coagulate and degrade during manufacturing. Coagulated protein products have previously been manufactured for example by acid and thermal coagulation, and some tuber proteins have been produced for animal use.

It is an object of the present disclosure to provide a tuber protein product and a method for manufacturing a tuber protein product, which can be easily included in food products for human use.

### SUMMARY

The appended claims define the scope of protection. Any example or technical description of a product and/or method which is not covered by the claims is presented not as an embodiment of the invention but as background art or example useful for understanding the claimed invention.

According to a first aspect there is provided a method for manufacturing food-grade tuber protein powder comprising:
a. providing a slurry comprising coagulated tuber protein, water, and optionally EDTA;
b. washing the slurry to obtain a washed slurry; and
c. drying;
and wherein at least one sugar additive is added to the slurry and/or to the washed slurry before and/or during drying.

According to another aspect is provided a use of, and a method of using, a sugar additive to reduce particle size of tuber protein powder, comprising adding a sugar additive before and/or during drying when manufacturing the tuber protein powder. During drying the present sugar additive enhances reduction of particle size especially when using a mill dryer.

In an embodiment the sugar additive of the use is at least one of glucose, fructose, galactose, sucrose, or a mixture thereof.

According to another embodiment is provided a food-grade tuber protein powder comprising tuber protein particles having a particle size distribution of d90 below 120µm and d50 below 60µm, preferably d90 below 100µm and d50 below 50µm, measured as a dry product; and a total sugar amount selected from a range 0.6-50g/kg on dry matter basis. Typically the total sugar amount is the amount of sugar present after the drying step of the present method.

According to another aspect is provided a food product for human use comprising the present food-grade tuber protein powder or manufactured according to the present method.

According to another aspect is provided an additive comprising the present food-grade tuber protein powder or manufactured according to the present method. Also provided is an additive comprising the present food-grade tuber protein powder or manufactured according to the present method, wherein the additive is a thickener or stabilizer. It is preferable to include the present protein powder in these applications, because it allows making completely vegan products.

According to another aspect is provided a processing aid comprising the present food-grade tuber protein powder or manufactured according to the present method. Also provided is a processing aid comprising the present food-grade tuber protein powder or manufactured according to the present method, wherein the processing aid is for clarification or fining of wine, beer, or juice. It is preferable to include the present protein powder in these applications, because it allows efficient clarification and production of completely vegan products, which is not possible when using previous clarifiers or finings based for example on gelatine, egg, or casein.

In the present disclosure the term clarification includes the term fining used in wine industry. Similarly, in this context the term clarifier is used as a synonym for the term finer.

Without being bound to any theory, it was surprisingly found that addition of the sugar additive allowed controlling the particle size of the protein powder to a desired range, thereby providing beneficial effects to the manufacturing process and to the manufactured protein powder.

The present method can be used to manufacture food-grade tuber protein powder which is suitable for human use and for animal use. The manufactured product has good palatability and a glycoalkaloid content which is well below typical requirements set for food-grade products. The manufacturing method uses a sugar additive which provides to the protein powder properties that make it preferable to provide a source of protein in various products for human use.

### BRIEF DESCRIPTION OF FIGURES

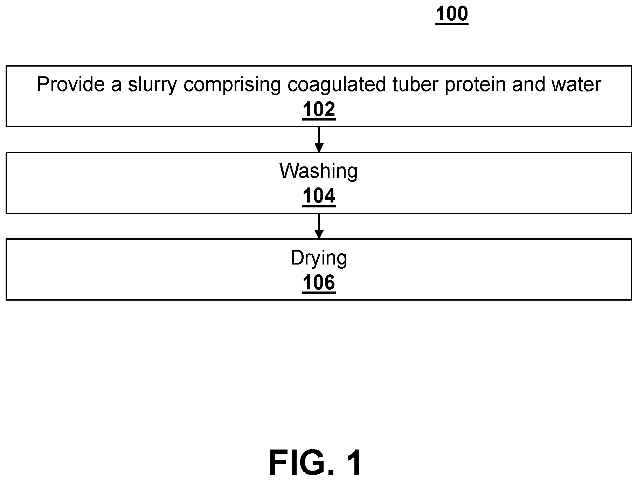

Fig. 1 is a flowchart of an example process 100 of the present manufacturing method. In some implementations, one or more process blocks of Fig. 1 may be performed when practicing the present manufacturing method.

As shown in Fig. 1, process 100 may include providing a slurry having coagulated tuber protein and water (block 102). As also shown in Fig. 1, process 100 may include washing the slurry to obtain a washed slurry (block 104). As further shown in Fig. 1, process 100 may include a drying step (block 106). In one embodiment, any or all of the above process steps may be performed as disclosed in the Examples or in any embodiment.

Although Fig. 1 shows example blocks of process 100, in some implementations process 100 may include additional blocks, fewer blocks, different blocks, or differently arranged blocks than those depicted in Fig. 1. Additionally, or alternatively, two or more of the blocks of process 100 may be performed in parallel. For example, a step of adding the sugar additive can be included in any step before or during the drying step (block 106).

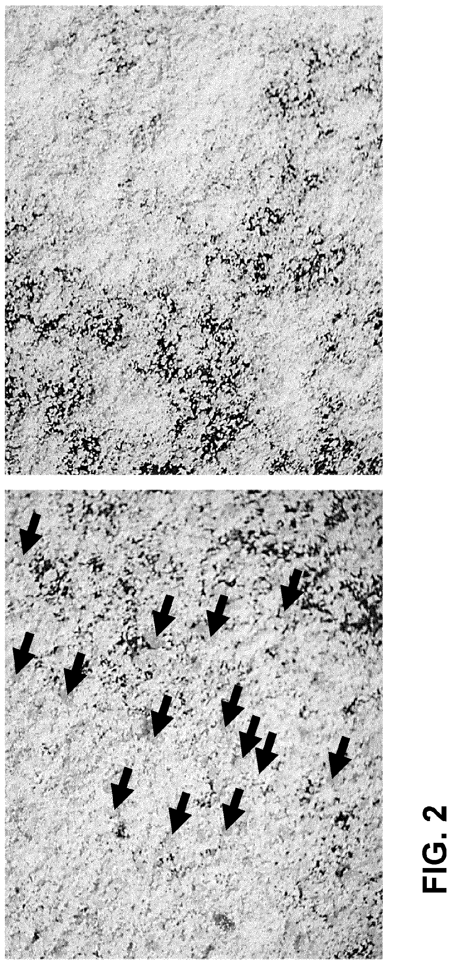

Fig. 2 is a micrograph showing a reference food-grade tuber protein powder (left, manufactured without sugar additive) and the present food-grade tuber protein powder manufactured according to the present method with the sugar additive (right, 1 g/kg glucose was used as the sugar additive in the drying step). The micrographs show that the largest particles showing as orange round shapes in the reference product (left, some of these largest particles are identified with an arrow in the figure) are almost completely absent in the present product (right).

### DETAILED DESCRIPTION

The terms "a" and "an" and "the" and similar in the context of describing features, elements, or claims are to be construed to cover both the singular and the plural, unless otherwise indicated or clearly contradicted by context.

Recitation of ranges of values herein are merely intended to serve as a way of referring individually to each separate value falling within the range, unless otherwise indicated herein. Each separate value is thus disclosed in the specification as if it were individually recited. In an embodiment, and as is understood by the skilled person in the context in which the expression is used, an open-ended range such as "less than 10" is to be construed as a range disclosing values below 10, but above 0. Such a range can be understood to include a lower limit of e.g. 0.0001, 0.001, 0.1, or 1. If a lower limit is not recited, a lower limit of an open ended range can be determined by the skilled person such that at least one technical effect is observable or measurable, thereby excluding insignificant trace amounts.

All methods described herein can be performed in any suitable order unless otherwise indicated herein or otherwise clearly contradicted by context. The use of any and all examples, or exemplary language (e.g., "such as", "for example", and "optionally") provided herein, is intended merely to better illustrate the embodiments and does not limit the scope of the claims unless otherwise stated. No language in the specification should be construed as indicating any non-claimed element as being an essential feature.

In another embodiment the method steps are carried out in the sequence identified in any aspect, embodiment, example, or claim. In another embodiment any method step specified to be carried out to a product or an intermediate obtained in a preceding process step is carried out directly to said product or intermediate, i.e. without additional, optional or auxiliary processing steps that may chemically and/or physically alter the product or intermediate between said two consecutive steps. For example, a washing step or extraction of material typically alters the chemical composition of the material in a chemical process.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in this specification and attached claims may be applied in the present invention as approximations that may vary depending upon the desired properties sought to be obtained by embodiments of the present disclosure. As used herein, "about" may be understood by persons of ordinary skill in the art and can vary to some extent depending upon the context in which it is used. If there are uses of the term which are not clear to persons of ordinary skill in the art, given the context in which it is used, "about" may mean up to plus or minus 10% of the particular term. In another embodiment the recited numerical parameter is employed instead of its approximation.

The terms "%", "% by weight", "weight %" and "wt-%" are all intended to mean, unless otherwise stated, percents by weight based upon a total weight of 100% end composition weight. Thus 10% by weight means that the component constitutes 10 wt. parts out of every 100 wt. parts of the total composition.

In an embodiment the present method is an industrial manufacturing method. An industrial scale manufacturing method is carried out in such a large scale that it practically excludes small scale and analytical scale methods. The present method can be applied to a batch process or to a continuous process. A continuous process is preferred when integrating the process into another industrial process which is run in a continuous mode.

Running the present method as a continuous process is also advantageous when adding the sugar additive during the drying step c, and in particular when using a mill dryer in step c. The slurry and the sugar additive can be fed into the mill dryer or to another dryer via the same or separate inlets. Use of separate inlets is preferred because it allows more precise control of the fed slurry and the sugar additive. A desired amount of the sugar additive can be easily controlled by monitoring the amount of slurry fed into the dyer, and then feeding an appropriate amount of the sugar additive for example as an aqueous liquid.

Tuber in the context of the present methods and products means any tuber plant, in particular a root tuber plant. Tuber plants include potato, Solanum tuberosum, Irish potato, sweet potato, Ipomoea batatas, cassava, Manihot esculenta, syn. M. utilissima, manioc, mandioca or yuca, M. palmata, syn. M. dulcis, yuca dulce, yam, Dioscorea spp.; yautia Xanthosoma spp., malanga, new cocoyam, ocumo, tannia, X. sagittifolium, taro, Colocasia esculenta, arracacha, Arracacoa xanthorrhiza, arrowroot, Maranta arundinacea, chufa, Cyperus esculentus, sago palm, Metroxylon spp., oca, Oxalis tuberosa, ullucu, Ullucus tuberosus, yam bean, Pachyrxhizus erosus, jicama, P. angulatus, mashua, Tropaeolum tuberosum, Jerusalem artichoke, topinambur, Helianthus tuberosus. Preferably the tuber is a potato or a sweet potato. More preferably the tuber is a potato.

In another embodiment the tuber is a plant belonging to any taxon below:

| | | | **Kingdom** | | | | **Plantae** - **Plants** |
|---|---|---|---|---|---|---|---|
| | | | | **Subkingdom** | | | ***Tracheobionta*** - **Vascular plants** |
| | | | | | **Superdivision** | | **Spermatophyta** - **Seed plants** |
| | | | | | | **Division** | **Magnoliophyta** - **Flowering plants** |
| | **Class** | | | | | | **Magnoliopsida** - **Dicotyledons** |
| | | | **Subclass** | | | | **Asteridae** |
| | | **Order** | | | | | **Solanales** |
| | | | | **Family** | | | **Solanaceae - Potato family** |
| | | | | | **Genus** | | **Solanum L. - nightshade** |
| | | | | | | **Species** | **Solanum tuberosum L. - Irish potato** |

The term tuber protein slurry, or a slurry comprising coagulated tuber protein, water, and optionally EDTA, means protein containing fraction which can be obtained from the tuber or tuber protein or tuber protein fraction.

In the present method the slurry comprising coagulated tuber protein comprises optionally EDTA. Adding EDTA may be advantageous to bind cations that would otherwise remain bound to tuber proteins and cause undesired color or taste in the product. Typically, EDTA and ions it binds are removed from the product during the manufacturing process, in particular during the washing step.

The tuber protein slurry may be obtained as a fresh product obtained as a side stream from tuber starch production. It is thus possible to use the present method as being integrated to a starch production facility to avoid production of proteinaceous waste streams.

In an embodiment the slurry is fresh. A fresh coagulated tuber protein slurry is not dried, and/or no removal of glycoalkaloids or only preliminary removal of glycoalkaloids typical for animal feed applications has been carried out to it. A non-limiting example of a fresh slurry is fresh potato fruit juice to which a protein coagulation process step has been carried out.

Alternatively, the coagulated tuber protein can be manufactured by a two-step process comprising heat coagulating fresh tuber juice followed by drying. This product can then be used in step a. by mixing with water and optionally EDTA to provide a slurry. A preferred example of the fresh tuber juice is fresh potato juice. Without being bound to any theory, during the drying step volatiles are removed and/or decomposed, and the resulting crude tuber protein powder has improved palatability and smell. Thus, it is preferable to use a two-step process to obtain the slurry comprising coagulated tuber protein, water, and optionally EDTA, instead of using fresh slurry in step a. of the present method.

In another embodiment the food-grade tuber protein powder is manufactured from coagulated potato protein, which may be a dried product such as a semi-finished product. The semi-finished coagulated potato protein may be manufactured by using the two-step process above, and then stored as a semi-finished product. Upon use, the semi-finished product is being mixed water and optionally EDTA for use in the present method. In this embodiment of the method the slurry comprising coagulated tuber protein, water, and optionally EDTA may be obtained by mixing semi-finished coagulated potato protein with water and optionally EDTA in a mixing tank. The semi-finished product contains glycoalkaloids and it can be produced for example from fresh potato fruit juice by heat coagulation and separation of coagulated protein using decanter centrifuge to obtain wet coagulated protein mass that is dried using a spin-flash dryer. Semi-finished tuber protein usually contains glycoalkaloids 2000 - 6000 ppm of DM according to used potato cultivar and cultivation and storage conditions.

When step a. involves using as a slurry comprising coagulated tuber protein, water, and optionally EDTA, a semi-finished product mixed with water and optionally EDTA, the obtained slurry can be provided in a higher consistency than when using a fresh slurry. The higher consistency allows to carry out the washing step b. more efficiently, and consequently using a semi-finished tuber protein in the present method is preferred instead of a fresh slurry.

In an embodiment the slurry is washed with water having a temperature in the range 60-80°C, preferably in the range 70-80°C, more preferably about 75°C. After washing, the product is called washed slurry.

Preferably the sugar additive is added after washing step, i.e. it is added to the washed slurry. This embodiment is advantageous because consumption of the sugar additive is smaller this way, because it is not removed in the washing step. Preferably the sugar additive is added after washing and before drying.

The added sugar additive provides advantageous reduction in the particle size distribution of the powder particles during the drying step. In particular, addition of sucrose to the washed slurry was demonstrated to be effective in the appended examples.

In an embodiment the drying step c. is carried out in a mill dryer. Use of a mill dryer is preferred because of its synergistic effect with the sugar additive to the particle size distribution. The drying step can be carried out by using a mill dryer and operating it at mill speed, drying fan speed, and upper temperature selected such that the desired dry matter content in the slurry, as well as the desired particle size, are achieved. Preferably the mill dryer is operated at mill speed of 1500rpm. Preferably the mill dryer is operated at drying fan speed of 75% or 2232 rpm. Preferably the mill dryer is operated at an upper temperature of 95°C.

In an embodiment the food-grade tuber protein powder has a d90 below 120µm, preferably d90 below 100µm. The reduction in larger particles is visible when comparing the protein powder manufactured by the present method with protein powder manufactured with prior methods, or which is manufactured without using the sugar additive.

In another embodiment the food-grade protein has a d50 below 60µm, preferably below 50µm.

Glycoalkaloids are natural components of conventional tuber plants and potato varieties. Commonly, the occurrence of glycoalkaloids is measured and reported as α-chaconine and α-solanine. In Solanum species, more than 80 different glycoalkaloids have been identified. It is therefore likely that cultivated potatoes also contain glycoalkaloids other than α-solanine and α-chaconine.

The maximum glycoalkaloid content 150mg/kg in the present food-grade tuber protein powder is in line with the EU Novel Food decision 2002/150/EC for coagulated potato proteins and hydrolysates. Preferably the glycoalkaloid content in the present food-grade tuber protein powder is below 120mg/kg, more preferably below 110mg/kg. Preferably the lower limit of glycoalkaloids is 100mg/kg. The glycoalkaloid content can be determined by LC-MS/MS analysis.

In an embodiment the glycoalkaloid content of the food-grade tuber protein powder is within the range 50-150mg/kg, 50-140mg/kg, 50-130mg/kg, 50-120mg/kg, 50-110mg/kg, 50-100mg/kg, 50-90mg/kg, or 50-80mg/kg.

In an embodiment the glycoalkaloid content of the food-grade tuber protein powder is within the range 60-150mg/kg, 60-140mg/kg, 60-130mg/kg, 60-120mg/kg, 60-110mg/kg, 60-100mg/kg, 60-90mg/kg, or 60-80mg/kg.

In an embodiment the glycoalkaloid content of the food-grade tuber protein powder is within the range 70-150mg/kg, 70-140mg/kg, 70-130mg/kg, 70-120mg/kg, 70-110mg/kg, 70-100mg/kg, 70-90mg/kg, 70-80mg/kg, or about 75mg/kg.

In an embodiment the glycoalkaloid content of the food-grade tuber protein powder is within the range 100-150mg/kg, 110-150mg/kg, or 120-150mg/kg. In another embodiment the glycoalkaloid content is 100-140mg/kg, 110-140mg/kg, or 120-140mg/kg. In another embodiment the glycoalkaloid content is 100-130mg/kg, 110-130mg/kg, or 120-130mg/kg. In another embodiment the glycoalkaloid content is 100-120mg/kg or 110-120mg/kg. The glycoalkaloids are reported based on dry matter.

In an embodiment the food product is a gluten-free product, such as gluten-free baked food product.

In an embodiment the food product is a vegan product.

In another embodiment the present food-grade tuber protein powder is included in the food product as a protein source.

In another embodiment the present food-grade tuber protein powder is included in a product for its technical effects. The present food-grade tuber protein powder can be used as a formulation aid, nutrient supplement, stabilizer, thickener, and/or texturizer or as a processing aid in wine, beer, and juice industry. Food categories for use of the present food-grade tuber protein powder are baked foods, baking mixes, grain products, pastas, fats, oils, dairy product analogs, egg products, frozen dairy desserts, fruit ices, water ices, milk products, nuts, nut products, gelatins, puddings, fillings, plant protein products, processed meat products, beverages, beverage bases, and wines. The present food-grade tuber protein powder may be used in food products as an alternative to other plant proteins. It can also be used as a protein supplement. It can be mixed in combination with other proteins or other components in a manner that does not necessarily change, i.e. increase or decrease, the actual intake of total protein. In a preferable embodiment the present food-grade tuber protein powder is used to replace or supplement another plant protein in the food product.

The properties of the present food-grade tuber protein powder can be used in the above uses and applications simply by mixing it with any or all other components of the food product. For example, it can be mixed with at least one dry component used in the manufacturing of the food product. Alternatively, the intended use may comprise simply mixing with wet components of the food product in which it is used. The present food-grade tuber protein powder can be mixed with water or other compatible liquid before mixing, or it can be added as a powder. The good flow properties of the present food-grade tuber protein allow it to be mixed easily with other dry products that are used to manufacture the food product.

The present food-grade tuber protein powder can be used in various food products in an amount ranging from 0.025wt-% to 30wt-%, or 0.1-30wt-%, or 1-30wt-%, or 0.025-10wt-%, or 0.1-10wt-%, or 1-10wt-%, or 0.025-5wt-%, or 0.1-5wt-%, or 1-5wt-%, or 0.025-3wt-%, or 0.1-3wt-%, or 1-3wt-%. In an embodiment the present food-grade tuber protein powder is used in a food product as a protein substitute which replaces other proteins in the product. Alternatively, the present food-grade tuber protein powder is added to a food product as an additional component.

In another example embodiment the amount of the present food-grade tuber protein powder is selected from the table below, wherein an example of a foot category is disclosed in parenthesis. For processing aid applications an added amount is indicated, because typically the processing aid is removed during the manufacturing process and none, or only trace amounts, of the processing aid can be found in the manufactured product.

| **Food category (proposed food uses)** | **Amount (w/w) as dry** |
|---|---|
| Baked foods and baking mixes, including gluten-free (Breads and buns, crisp bread, cookies, muffins, and cakes) | ≤10%, 0.1-10%, 0.1-3%, 1-10%, 3-10% |
| Grain products and Pastas (Protein-, granola- and nutritious bars) | ≤10%, 0.1-10% |
| Fats and Oils (Creamy salad dressings, mayonnaises) | ≤15%, 0.1-15% |
| Dairy product analogs (Coffee whiteners and whipped toppings) | ≤4%, 0.1-4% |
| Egg products (Meringues) | ≤4%, 0.1-4% |
| Frozen dairy desserts (Frozen yoghurt and ice cream) | ≤1%, 0.1-1% |
| Fruit and water ices (Sorbet) | ≤1%, 0.1-1% |
| Milk products (Yoghurt) | ≤0.5%, 0.01-0.5% |
| Nuts and nut products (Coated peanuts) | ≤15%, 0.1-15% |
| Gelatins, Puddings and Fillings (Mousses) | ≤4%, 0.1-4% |
| Plant protein products (Meat analogs) | ≤30%, 0.1-30% |
| Processed meat products (Beef and poultry patties, deli meats, pates, sausages) | ≤3%, 0.1-3% |
| Beverages and beverage bases (Sports drinks and recovery drinks for adults) | ≤10%, 0.1-10% |
| Wine, beer, juice (when used as a processing aid, the amount indicates the added amount) | ≤0.025%, 0.001-0.025% |

In an embodiment the sugar additive comprises at least one monosaccharide, at least one disaccharide, or a mixture thereof.

A disaccharide is a sugar molecule formed of monosaccharides by a glycosidic linkage. In an embodiment the disaccharide is at least one of sucrose, maltose, and trehalose, or any mixture thereof.

In an embodiment the sugar additive comprises at least one of glucose, fructose, sucrose, maltose, trehalose, and galactose, or any mixture thereof.

In a preferred embodiment the sugar additive is or comprises sucrose.

In an embodiment the amount of the added sugar additive is at least 0.5g/kg on dry matter basis. In another embodiment the amount of the added sugar additive is at least 0.6, at least 0.7, at least 0.8, at least 0.9, at least 1, at least 2, at least 3, at least 4, at least 5, at least 6, at least 7, at least 8, at least 9, at least 10, at least 15, at least 20, or at least 30g/kg on dry matter basis.

In an embodiment the amount of the added sugar additive is not more than 100g/kg on dry matter basis. In another embodiment the amount of the added sugar additive is not more than 90, not more than 80, not more than 70, not more than 60, not more than 50, not more than 40, not more than 30, not more than 20, or not more than 10g/kg on dry matter basis.

In an embodiment the amount of the added sugar additive is selected from a range 0.6-50g/kg, preferably 0.6-30g/kg, and more preferably 0.6-10g/kg, on dry matter basis.

In an embodiment the amount of the added sugar additive is selected from a range 0.5-20g/kg, 0.5-15g/kg, or 0.5-20g/kg, on dry matter basis.

In an embodiment the amount of the added sugar additive is selected from a range 0.5-5g/kg on dry matter basis, or from a range 0.5-4g/kg, 0.5-3g/kg, 0.5-2g/kg, 0.6-5g/kg, 0.6-4g/kg, 0.6-3g/kg, 0.6-2g/kg, 1-5g/kg, 1-4g/kg, 1-3g/kg, or 1-2g/kg, on dry matter basis.

In an embodiment the amount of the added sugar additive is selected from a range 0.4-5g/kg, 0.4-5g/kg, 0.4-4g/kg, 0.4-3g/kg, 0.4-2g/kg, or 0.4-1g/kg, on dry matter basis.

In an embodiment the amount of the added sugar additive is selected from a range 0.6-5g/kg, 0.6-5g/kg, 0.6-4g/kg, 0.6-3g/kg, 0.6-2g/kg, or 0.6-1g/kg, on dry matter basis.

In an embodiment the amount of the added sugar additive is selected from a range 0.7-5g/kg, 0.7-5g/kg, 0.7-4g/kg, 0.7-3g/kg, 0.7-2g/kg, or 0.7-1g/kg, on dry matter basis.

In an embodiment the amount of the added sugar additive is selected from a range 0.8-5g/kg, 0.8-5g/kg, 0.8-4g/kg, 0.8-3g/kg, 0.8-2g/kg, or 0.8-1g/kg, on dry matter basis.

The term "added sugar additive" means the sugar additive which added into the slurry or to the washed slurry during the manufacturing method. In an embodiment this amount does not include any disaccharide or monosaccharide which is present, or which is formed, in the slurry or in the washed slurry before the sugar additive is added.

In an embodiment the sugar additive is added as an aqueous solution or as an aqueous slurry. In another embodiment the sugar additive is added as a solid.

In an embodiment the drying step is carried out to provide tuber protein powder having a particle size distribution of d90 below 120µm and d50 below 60µm, preferably d90 below 100µm and d50 below 50µm.

It was surprisingly found that when the sugar additive is added before or during drying, in particular bigger particles of the obtained powder are smaller after drying, see also Figure 2. The added sugar additive thus provides an advantageous effect during the drying step, as is shown by the decreased d90 value when compared to an otherwise similar manufacturing method without added sugar additive. Without being bound to any theory, this effect seems to be achievable when using the present sugar additive in the manufacturing method, and the reduction in the d90 value is the strongest when using an impact mill dryer. The effect is evidenced by the Examples below, see Table 4.

In an embodiment during the method pH is set to a value in a range 4.5-6.5, preferably in a range 5-6.4, before or after adding the sugar additive.

In an embodiment pH is set in a mixing tank before, after, or simultaneously with the addition of the sugar additive. This is advantageous when running the method as a continuous process to simplify the method. Preferably, the method is run continuously, and pH is set at least partially simultaneously with the addition of the sugar additive.

In an embodiment the method is carried out in a batch mode and pH is set before, after, or simultaneously with the addition of the sugar additive.

In an embodiment the washed slurry has a conductivity in the range 1-4mS/cm, preferably 1-3.5mS/cm, more preferably 1-3mS/cm.

In an embodiment the washed slurry has a conductivity in the range 1.5-4mS/cm, preferably 1.5-3.5mS/cm, more preferably 1.5-3mS/cm.

In an embodiment the washed slurry has a conductivity in the range 2-4mS/cm, preferably 2-3.5mS/cm, more preferably 2-3mS/cm.

The conductivity of the slurry can be measured from the wash water obtained during washing. Typically, the slurry is washed with water and the conductivity of the slurry or the washed slurry corresponds to the conductivity of the wash water.

In an embodiment the washed slurry is neutralized. Preferably the conductivity is measured before adding a neutralizing agent, and the neutralizing agent is added to a washed slurry having the selected conductivity.

A neutralizing agent is an agent which changes pH toward pH 7. Thus, a base such as NaOH or KOH can be used to neutralize an acidic slurry. If the slurry is basic, it can be neutralized by adding an acid, such as a sulfuric acid.

In an embodiment the washed slurry has a SO₂ content in a range 25-100ppm, 25-75ppm, 25-60ppm; or 40-100ppm, 40-75ppm, or 40-60ppm; or 50-100ppm, 50-75ppm, or 50-60ppm.

In an embodiment the washed slurry has a Na content in a range 1500-11000ppm and a SO₂ content in a range 25-100ppm, or a Na content in a range 1500-3300ppm and a SO₂ content in a range 35-100ppm.

In an embodiment the washed slurry has a Na content in a range 1500-11000ppm and a SO₂ content in a range 25-75ppm, or a Na content in a range 1500-3300ppm and a SO₂ content in a range 35-75ppm.

In an embodiment SO₂ is controlled to a range 25-35ppm, more preferably to 25-30ppm or to about 30ppm. This amount is preferable when a low sulfite amount is needed, such as when the food-grade tuber protein powder is used as a food additive or as a wine stabilizer, clarifier, or finer. Similarly, with these amounts it is possible to manufacture low sulfite product for use as stabilizer, processing aid, or thickener. Sulfite is known to cause symptoms of allergy and asthma, and with the present method it is possible to manufacture alternative food additives and food products with very low sulfite content, thereby alleviating problems relating to sulfite sensitivity. The SO₂ amount can be controlled by measuring the SO₂ during washing, and continuing to the drying step when the desired SO₂ threshold has been reached.

In an embodiment the tuber is a potato tuber. Use of a potato tuber in the coagulated tuber protein slurry is preferred when implementing the method in a potato starch production facility. A use of the semi-finished potato protein as a source of protein is preferred because it is a dry product allowing its storing and transporting, as well as carrying out the washing step in a high consistency.

In an embodiment a total sugar amount is calculated as the amount of total sugars present in the food-grade tuber protein powder as a dry product and it is expressed as g total sugars / kg protein powder as a dry product. The total sugars may include the amount of the added sugar additive.

In an embodiment the total sugars comprise at least one of glucose, fructose, sucrose, maltose, trehalose, or galactose.

In another embodiment the total sugars comprise or consist of glucose, fructose, and sucrose.

In yet another embodiment the total sugars comprise or consist of glucose, fructose, sucrose, maltose, trehalose, and galactose.

In an embodiment the total sugar amount in the food-grade tuber protein powder is above 0.5g/kg, above 0.6g/kg, above 0.7g/kg, above 0.8g/kg, above 0.9g/kg, above 1g/kg, above 2g/kg, above 3g/kg, above 5g/kg, above 10g/kg, above 15g/kg, above 30g/kg, or above 50g/kg.

In an embodiment the total sugar amount in the food-grade tuber protein powder is on dry matter basis within a range between 0.6g/kg and 50g/kg; preferably between 0.6g/kg and 30g/kg, or between 0.6g/kg and 10g/kg; more preferably within a range between 0.7g/kg and 50g/kg, between 0.7g/kg and 30g/kg, or between 0.7g/kg and 10g/kg, more preferably within a range between 0.8g/kg and 50g/kg; between 0.8g/kg and 30g/kg, or between 0.8g/kg and 10g/kg; and even more preferably within a range between 1g/kg and 50g/kg; between 1g/kg and 30g/kg, or between 1g/kg and 10g/kg.

In an embodiment the total sugar amount in the food-grade tuber protein powder is within a range between 0.6g/kg and 6g/kg; preferably between 0.6g/kg and 5g/kg, or between 0.6g/kg and 4g/kg; more preferably between 0.7g/kg and 6g/kg, between 0.7g/kg and 5g/kg, or between 0.7g/kg and 4g/kg.

In an embodiment the total sugar amount in the food-grade tuber protein powder is within the range between 0.8g/kg and 6g/kg; preferably between 0.8g/kg and 5g/kg, or between 0.8g/kg and 4g/kg; more preferably between 0.9g/kg and 6g/kg, or between 0.9g/kg and 5g/kg, or between 0.9g/kg and 4g/kg.

In an embodiment the food-grade tuber protein powder has a glycoalkaloid content of max. 150mg/kg, preferably between 110-150mg/kg based on dry weight.

In an embodiment in the food-grade tuber protein powder the tuber is a potato tuber.

In an embodiment the food product, which comprises the food-grade tuber protein powder or which is manufactured according to the present method, is at least one of:
baked food, such as bread, bun, roll, crisp bread, cookie, muffin, or cake;
a grain product such as protein bar, granola bar, or nutritious bar;
a food product containing fat and/or oil, such as creamy salad dressing, or mayonnaise;
dairy analogue such as coffee whitener or whipped topping;
an egg product, such as a meringue;
a frozen dairy dessert, such as frozen yoghurt or ice cream;
a fruit ice or water ice, such as a sorbet;
a milk product, such as a yoghurt;
a nut product, such as a coated peanut,
a gelatin, pudding, or filling, such as a mousse;
a plant protein product, such as a meat analogue;
a processed meat product, such as a beef product or a poultry product such as a patty, a deli meat, a pate, or a sausage; or
a beverage or a beverage base, such as a sport drink or a recovery drink.

In an embodiment in the present additive the SO₂ amount is 25-100ppm, 25-75ppm, 25-60ppm; or 40-100ppm, 40-75ppm, or 40-60ppm; or 50-100ppm, 50-75ppm, or 50-60ppm.

In an embodiment in the present additive the SO₂ amount is 25-35ppm, more preferably 25-30ppm, or about 30ppm. This amount is preferable when the additive is used as an additive or as a processing aid for clarifying wine, beer, or juice, where low sulfite levels are beneficial because of sulfite sensitivity concerns.

Use of the present food-grade tuber protein powder in the above products is advantageous. The product characteristics of the present powder allow the powder to be easily mixed in desired products as an additive without significantly changing other characteristics, such as palatability, colour, texture, or rheology of the product. However, the use of the present powder is not limited to such a use, but it can be used in a larger amount for example to significantly increase protein content of the product, or to change rheological properties of the product. The present powder can thus be flexibly used according to a desired effect which is to be achieved by its addition.

In an embodiment the food-grade tuber protein powder has a light beige colour. The lighter colour of the present powder, compared to prior art protein powders, indicates improved purity.

The particle size distribution of the present food-grade tuber protein powder can be verified by particle size analysis, or visually. The smaller amount of bigger particles in the present product can be easily seen when comparing to a powder obtained without adding a sugar amount under a microscope, see also Figure 2.

In an embodiment the food-grade tuber protein powder has a density in the range 480-900g/l, preferably 480-800g/l, as a dry product.

In another embodiment the food-grade tuber protein powder has a density in the range 500-900g/l, 500-800g/l, or 500-700g/l, as a dry product.

In an embodiment the food-grade tuber protein powder has protein content of at least 75% based on dry matter. In an embodiment the protein content is at least 80% based on dry matter. In another embodiment the protein content is within the range 75-99%, 75-95%, 75-90%, 75-85%, 77-99%, 77-95%, 77-90%, 77-85%, 80-99%, 80-95%, 80-90%, 80-85%, or 85-99%, 85-95%, 85-90%, 90-99%, or 90-95%, as a dry product.

A characteristic of the present food-grade tuber protein powder is its particle size, and its particle size distribution. The particle size of the present protein powder can be analysed as described in Examples. The present protein powder is characterised by d-50, d-10, and/or d-90 values that are typically used to characterise particulate material and its particle size distribution.

The d-50 value is the volume median particle size and it indicates the median diameter, in µm, of the particles that splits the distribution of the particle sizes into two equal fractions: a half of the particle volume having a diameter above the median diameter, and a half of the particle volume having a diameter below the median diameter.

The d-10 value indicates the diameter that splits the particle size distribution into two volume portions: a 10% portion of the particle volume having a diameter below the d-10 value in µm, and a 90% portion having a diameter above the d-10 in µm.

The d-90 value indicates similarly the diameter that splits the particle size distribution into two volume portions: a 90% portion of the particle volume having a diameter below the d-90 value in µm, and a 10% portion of the particle volume having a diameter above the d-90 value in µm.

In an embodiment, during the manufacturing process the particle size is actively reduced to a specified size. Preferably the particle size reduction is achieved by a mill dryer, which provides simultaneous milling and drying in the presence of the added sugar additive.

In an embodiment the present food-grade tuber protein powder has a moisture content of max 11%, preferably below 10%, more preferably below 5%. The moisture content can be determined according to ISO6496:1999M. In an embodiment all references to dry matter, such as "based on dry matter" and similar in the present application are used with a reference to the above moisture content.

The present food-grade tuber protein powder has a neutral flavor and odor. Without being bound to any theory, it is expected that the present manufacturing process effectively removes components that may provide an unpleasant smell or taste to the present product. The removal of these components is also seen as the lighter colour of the present food-grade tuber protein, compared to prior tuber protein powders.

The appearance of the present food-grade tuber protein powder is free flowing, light beige, fine powder, making it compatible with various food products.

In an embodiment washing is carried out by a decanter centrifuge in the present method. A suitable non-limiting example of a decanter centrifuge is Flottweg Z6 by Flottweg, Germany.

In an embodiment simultaneous milling and drying is carried out by a mill dyer in the present method. A non-limiting example of a suitable mill dryer is Jäckering UR5 by Jäckering, Germany.

During the manufacturing method additional processing aids such as antifoam agents, food grade mineral acid and/or alkali, and/or sulphite can be used.

### EXAMPLES

The following examples are provided to better illustrate the claimed invention. They are not to be interpreted as limiting the scope of the invention, which is determined by the claims. To the extent that specific materials are mentioned, it is merely for purposes of illustration and is not intended to limit the invention. One skilled in the art may develop equivalent means or reactants without exercising inventive capacity and without departing from the scope of the invention. It shall be understood that many variations can be made in the procedures described herein while remaining within the scope of the present invention.

### Experiment with added glucose

A first sugar additive experiment was conducted with glucose as an example during industrial washing process of semi-finished potato protein as an example of a slurry comprising coagulated tuber protein and water. Semi-finished potato protein contains glycoalkaloids and it was produced from potato fruit juice by heat coagulation and separation of coagulated protein using decanter centrifuge to obtain wet coagulated protein mass that was dried using spin-flash dryer. Semi-finished potato protein usually contains glycoalkaloids 2000 - 6000 ppm of DM according to used potato cultivar and cultivation and storage conditions. After washing, solids were mixed with tap water and glucose was added 0.5g/kg. Product was dried with mill dryer. Particle size was measured from three parallel samples collected after the mill drying. It was noticed that particle size was considerably reduced in comparison to the samples produced without glucose addition (Reference sample). The results are shown in Table 1.

**Table 1: Particle size analysis results from initial experiment, with glucose addition of 0.5g/kg. Results are presented as average from parallel samples.**

| | D10 (10% of particles are ≤ of indicated ø) | D50 (50% of particles are ≤ of indicated ø) | D90 (90% of particles are ≤ of indicated ø) |
|---|---|---|---|
| Average of three parallel samples with glucose addition 0.5g/kg | ø 16µm | ø 44µm | ø 108µm |
| Reference (average of four independent production batches) | ø 21µm | ø 71µm | ø 224µm |

### Industrial scale test run with sucrose and glucose additions

After the initial experiment, an industrial scale test run was conducted by adding sucrose and glucose to semi-finished potato protein. Generally, the semi-finished potato protein was washed three times in acidic conditions to remove glycoalkaloids, neutralized, and sugars were added at concentrations presented in Table 2 below. After the sugar addition, the obtained product was dried with a mill dryer. The test run was conducted as a continuous process. After each sugar addition, the run was continued for approximately 3h until a representative sample was collected from the mill dryer. After the sampling, the sugar dosage was changed, and the run was continued.

In details, test run was conducted as follows:
Semi-finished dry potato protein powder was mixed with ∼15 x weight volume of +70°C tap water, with a feed rate of 250kg/h of protein powder and 3.8m³/h of water. pH was adjusted with 93% sulfuric acid to pH 2. Slurry was further mixed for 60 minutes.

Slurry was fed to Flottweg Z6 decanter centrifuge and protein solids (Solid 1) were separated from liquid. Protein solids were transferred to mixing tank with +70°C tap water (3.8m³/h) using screw conveyor. Protein slurry was mixed 1h using paddle mixer.

Slurry was fed second time to Flottweg Z6 decanter centrifuge and protein solids (Solid 2) were separated from liquid. Protein solids were transferred to mixing tank with +70°C tap water (3.8m³/h) using screw conveyor. Protein slurry was mixed 30min using paddle mixer. Slurry was fed third time to Flotfinieg Z6 decanter centrifuge and protein solids (Solid 3a) were separated from liquid. Protein solids were transferred to mixing tank, mixed with tap water and pH was adjusted to 6.2 with 25% NaOH.

Glucose or sucrose solutions according to table 2 were added to the Solid 3a slurry after neutralization. Test run was then continued approximately 3h, samples were collected, and sugar dosage was changed (table 2, samples 1-4).

Alternatively, Solid 2 protein slurry was neutralized to pH 6.2 as described, fed third time to Flottweg Z6 decanter centrifuge and protein solids (Solid 3b) were separated from the liquid. Solid 3b was fed directly to mill dryer, simultaneously with glucose solution (table 2, sample 5).

**Table 2: Sugar dosing in PP1 test run for added sucrose or glucose.**

| Sample | Sugar dosing |
|---|---|
| 1 | Sucrose 4.0g/kg added to Solid 3a slurry |
| 2 | Glucose 1.0g/kg added to Solid 3a slurry |
| 3 | Glucose 2.0g/kg added to Solid 3a slurry |
| 4 | Glucose 5.0g/kg added to Solid 3a slurry |
| 5 | Glucose 5.0g/kg, added directly to mill dryer simultaneously with Solid 3b |

After the test run, sugar content of collected samples was determined with Gas Chromatography-Flame Ionization Detection (GC-FID) method, by accredited service provider KVVY Tutkimus Oy. Sample from a previous potato protein production process without sugar addition was used as a control (Reference sample in Table 3 below). Results are collected to table 3 below. It should be noted that as test run was conducted as a continuous process, there are some residual sucrose in samples in which only glucose was intended to add, especially on sample 2.

**Table 3: Sugar content of potato protein samples with added sucrose or glucose (samples 1-5) and a reference sample from a corresponding process without sugar addition.**

| | Sample 1 | Sample 2 | Sample 3 | Sample 4 | Sample 5 | Reference (no sugar addition) |
|---|---|---|---|---|---|---|
| Total sugars | 3.3g/kg | 3.2g/kg | 1.5g/kg | 1.4g/kg | 2.6g/kg | <0.1g/kg |
| Glucose | n/a | 0.4g/kg | 0.6g/kg | 1.2g/kg | 2.1g/kg | n/a |
| Sucrose | 3.3g/kg | 2.8g/kg | 0.8g/kg | 0.2g/kg | 0.5g/kg | n/a |
| Other sugars | <0.1g/kg | <0.1g/kg | <0.1g/kg | <0.1g/kg | <0.1g/kg | n/a |

### Particle size analysis

Particle size analysis of the above-described samples 1-5 was conducted with Coulter LS230 analyser according to manufacturer's instructions. Analysis is based on the combination of information produced by two different optical systems, laser diffraction and the variation of polarized light wavelengths. The detection limits of the analyser are between 0.04µm and 2000µm.

Results of the particle size analysis are presented on table 4 below, as the maximal particle size of the specified proportion of the sample (D10 - 10% -, D50 - 50% -, D90 - 90% of the particles). As a reference, average particle size from samples from four independent regular PP1 production batches w/o sugar addition was used.

**Table 4: Particle size analysis results with and without sugar addition**

| | D10 (10% of particles are ≤ of indicated ø) | D50 (50% of particles are ≤ of indicated ø) | D90 (90% of particles are ≤ of indicated ø) |
|---|---|---|---|
| Sample 1 (Sucrose 4 g/kg) | 18µm | 52µm | 144µm |
| Sample 2 (Glucose 1 g/kg) | 20µm | 48µm | 107µm |
| Sample 3 (Glucose 2 g/kg) | 22µm | 48µm | 93µm |
| Sample 4 (Glucose 5 g/kg solid 3a) | 20µm | 48µm | 128µm |
| Sample 5 (Glucose 5 g/kg solid 3b) | 18µm | 65µm | 177µm |
| Reference (average of four independent production batches) | 21µm | 71µm | 224µm |

## Claims

1. A method for manufacturing food-grade tuber protein powder comprising:
a. providing a slurry comprising coagulated tuber protein, water, and optionally EDTA;
b. washing the slurry to obtain a washed slurry; and
c. drying;
and wherein at least one sugar additive is added to the slurry and/or to the washed slurry before and/or during drying.

2. The method of claim 1, wherein the sugar additive comprises at least one monosaccharide, at least one disaccharide, or a mixture thereof.

3. The method of any one of claims 1-2, wherein an amount of the added sugar additive is selected from a range 0.6-50g/kg, preferably 0.6-30g/kg, and more preferably 0.6-10g/kg, on dry matter basis.

4. The method of any one of claims 1-3, wherein the drying step is carried out to provide tuber protein powder having a particle size distribution of d90 below 120µm and d50 below 60µm, preferably d90 below 100µm and d50 below 50µm.

5. The method of any one of the claims 1-4, wherein in pH is set to a value in a range 4.5-6.5, preferably in a range 5-6.4, before or after adding the sugar additive.

6. The method of any one of the claims 1-5, wherein the washed slurry has a conductivity in the range 2-4mS/cm, preferably 2-3.5mS/cm, more preferably 2-3mS/cm.

7. The method of any one of the claims 1-6, wherein the washed slurry has a Na content in a range 1500-11000ppm and a SO₂ content in a range 25-100ppm, or a Na content in a range 1500-3300ppm and a SO₂ content in a range 35-100ppm.

8. The method of any one of claims 1-7 wherein the tuber is a potato tuber.

9. A food-grade tuber protein powder having tuber protein particles having a particle size distribution of d90 below 120µm and d50 below 60µm, preferably d90 below 100µm and d50 below 50µm, measured as a dry product; and a total sugar amount selected from a range 0.6-50g/kg on dry matter basis.

10. The food-grade tuber protein powder of claim 9, wherein the total sugars comprise glucose, fructose, sucrose, maltose, trehalose, and/or galactose.

11. The food-grade tuber protein powder of any one of claims 9-10 having a glycoalkaloid content of max. 150mg/kg, preferably in the range 110-150mg/kg based on dry weight.

12. The food-grade tuber protein powder of any one of claims 9-11, wherein the tuber is a potato tuber.

13. A food product for human use comprising the food-grade tuber protein powder of any one of the claims 9-12, or manufactured according to any one of the claims 1-8.

14. The food product of claim 13, wherein the food product is:
a baked food, such as bread, bun, roll, crisp bread, cookie, muffin, or cake;
a grain product such as protein bar, granola bar, or nutritious bar;
a food product containing fat and/or oil, such as creamy salad dressing, or
mayonnaise;
dairy analogue such as coffee whitener or whipped topping;
an egg product, such as a meringue;
a frozen dairy dessert, such as frozen yoghurt or ice cream;
a fruit ice or water ice, such as a sorbet;
a milk product, such as a yoghurt;
a nut product, such as a coated peanut,
a gelatin, pudding, or filling, such as a mousse;
a plant protein product, such as a meat analogue;
a processed meat product, such as a beef product or a poultry product such as a patty, a deli meat, a pate, or a sausage; or
a beverage or a beverage base, such as a sport drink or a recovery drink.

15. An additive or a processing aid comprising the food-grade tuber protein powder of any one of the claims 9-12 or manufactured according to any one of the claims 1-8, and wherein the additive is a thickener, stabilizer, and/or the processing aid is for clarification of wine, beer, or juice.
